(19) Europäisches Patentamt
European Patent Office
Office européen des brevets

(11) Veröffentlichungsnummer: **0 012 350**
**B1**

(12) # EUROPÄISCHE PATENTSCHRIFT

(45) Veröffentlichungstag der Patentschrift: **07.04.82**

(21) Anmeldenummer: **79104936.4**

(22) Anmeldetag: **05.12.79**

(51) Int. Cl.³: **C 09 B 35/28**, C 09 B 35/46, C 09 B 35/60, C 09 B 45/28, D 06 P 3/02

(54) **Azofarbstoffe sowie deren Herstellung und Verwendung zum Färben von N-haltigen Materialien.**

(30) Priorität: **14.12.78 DE 2853935**

(43) Veröffentlichungstag der Anmeldung: **25.06.80 (Patentblatt 80/13)**

(45) Bekanntmachung des Hinweises auf die Patenterteilung: **07.04.82 Patentblatt 82/14**

(84) Benannte Vertragsstaaten: **BE CH DE FR GB IT**

(56) Entgegenhaltungen:
**FR - A - 1 394 571**
**US - A - 2 862 919**

(73) Patentinhaber: **BAYER AG**
**Zentralbereich Patente, Marken und Lizenzen**
**D-5090 Leverkusen 1, Bayerwerk (DE)**

(72) Erfinder: **Westphal, Jochen, Dr.**
**Nägelestrasse 10A**
**D-4000 Düsseldorf (DE)**

**EP 0 012 350 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Azofarbstoffe sowie deren Herstellung und Verwendung zum Färben von N-haltigen Materialien

Gegenstand der Erfindung sind gegebenenfalls metallhaltige Azofarbstoffe, die in Form der freien Säure der Formel I entsprechen :

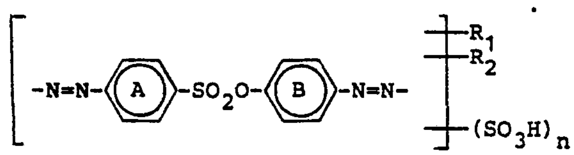

(I)

worin

$R_1$, $R_2$ = Rest einer gegebenenfalls funktionell abgewandelten Kupplungskomponente

n = 1-6 und wobei die Ringe A und B weitersubstituiert sein können.

$R^1$ und $R^2$ können gleich oder verschieden sein.

Geeignete Reste $R_1$ und $R_2$ sind beispielsweise solche der Hydroxy-, amino- und Hydroxy-aminobenzol- bzw. -naphthalinreihe sowie der heterocyclischen Reihe, insbesondere der Pyrazolon-, Aminopyrazol- und Pyridonreihe und der CH-aciden Reihe, beispielsweise der Acetessigarylidreihe.

Bevorzugte Farbstoffe entsprechen der Formel II

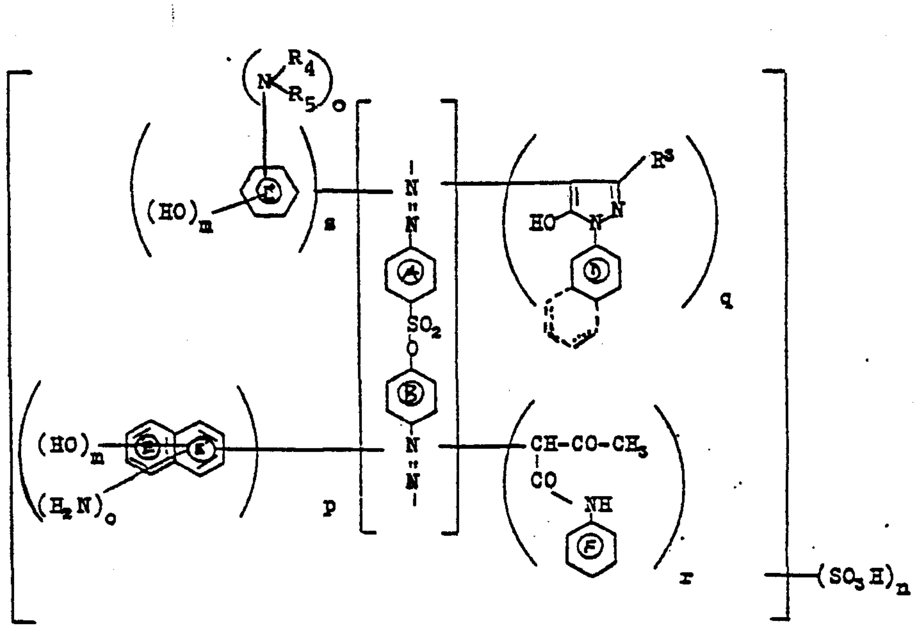

(II)

worin

n = 1-6

o und m = 0, 1 oder 2 und

$(o + m) \neq 0$

$R^3$ = Methyl, Carboxyl, CN,

$R_4$, $R_5$ = Wasserstoff oder gegebenenfalls substituiertes Alkyl und

p, q, r und s = 0, 1 oder 2 und

$(p + q + r + s) = 2$,

wobei die Ringe A-F weitere Substituenten enthalten können und die Reste $—SO_3H$ an einem der Ringe A-F oder $R_3$ gebunden sind.

Geeignete Substituenten sind beispielsweise Halogen, wie Chlor oder Brom, gegebenenfalls substituiertes Alkyl wie Methyl, Ethyl, Hydroxyethyl oder Cyanethyl, gegebenenfalls substituiertes Alkoxy, wie Methoxy, Ethoxy oder Methoxyethoxy, Nitro, Cyan, Alkylsulfonyl wie Methyl- oder Ethyl-sulfonyl, Carbamoyl, Sulfamoyl, N-substituiertes Carbamoyl, wie mono- oder di-N-Alkylamide, N-substituiertes Sulfamoyl, wie mono- oder di-N-Alkyl-sulfamide, Alkyl-(wie Methyl-, Ethyl-)-carbonylamino, Ureido, Carboxyl, Alkoxycarbonyl, wie Methoxy-, Ethoxy- oder Propoxy-carbonyl, Phenylazo- oder Hydroxysulfonyl.

Die Alkyl- und Alkoxyreste sind vorzugsweise solche mit 1-4 C-Atomen.

Weitere bevorzugte Farbstoffe sind solche der Formel

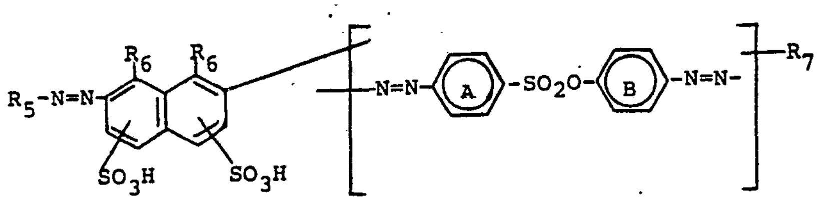

(III)

worin

$R_5$ den Rest einer Diazokomponente der Benzol- oder Naphthalinreihe, bevorzugt Phenyl-, 4-Nitrophenyl-, 4-Sulfo- oder 2,5- bzw. 2,4-Disulfophenyl-, 2-Hydroxy-5-sulfophenyl- oder 6- bzw. 7-Sulfo-2-naphthyl darstellt,

ein $R_6$ $NH_2$, das andere

$R_6$ OH und

$R_7$ den Rest einer Kupplungskomponente insbesondere der Aminobenzol-, Hydroxybenzol-, Aminonaphthalin- oder Acetessigarylidreihe.

Bevorzugt steht $R_7$ für 2,4-Diaminophenyl-, 2,4-Diamino-5-sulfophenyl-, 2-Hydroxy-4-phenylaminophenyl-, Resorcinyl-, 4-Diäthylamino-2-acetylamino-phenyl-, 4-Amino-7-sulfonaphthyl-(1), 4-Hydroxy-3-carboxyphenyl-, 1-(3'- oder 4'-Sulfophenyl)-3-methyl-pyrazolonyl-(5)- oder 3'- oder 4'-Sulfoanilin-acetoacetyl-(2) bedeuten.

Bevorzugte Metallkomplexfarbstoffe sind solche auf Basis von metallfreien Farbstoffen der Formel

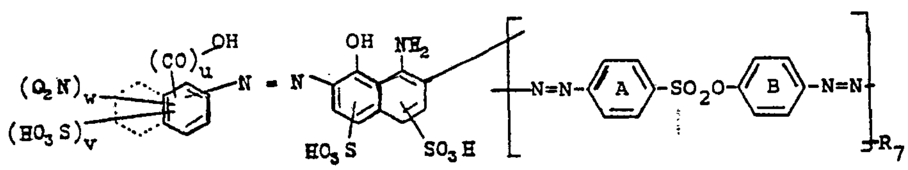

(IV)

worin $R_7$ die oben angeführten Bedeutungen hat,

u, w = 0, 1 ; v = 0, 1, 2 oder 3, insbesondere die 1: 1-bzw. 1: 2-Metallkomplexe mit Cr, Co, Fe und Cu als Metallatom.

Weitere bevorzugte Farbstoffe sind solche der Formel

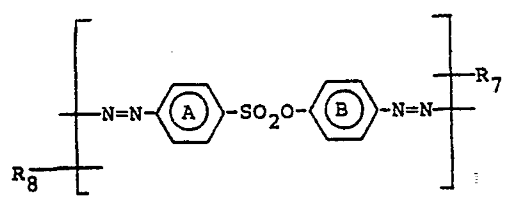

(V)

worin

$R_7$ die obengenannte Bedeutung hat und

$R_8$ für den Rest einer Aminohydroxynaphtalinmono- oder- disulfonsäure steht, insbesondere einer solchen der Formel

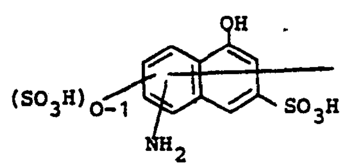

Weitere bevorzugte Farbstoffe sind folgende :

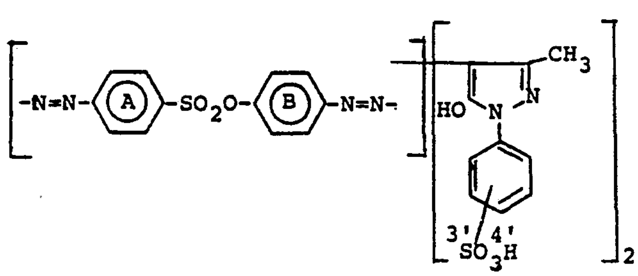

(VI)

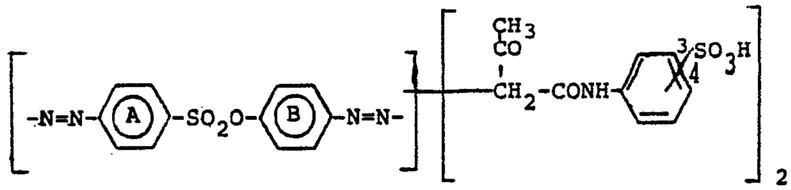

(VII)

Die Farbstoffe (VI) lassen sich in bekannter Weise oxidativ kupfern. Dabei entstehen wahrscheinlich die Mono-Kupferkomplexe.

Die Farbstoffe I werden bevorzugt durch Kupplung des Bisdiazoniumsalzes einer Verbindung

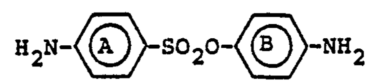

(IX)

in beliebiger Reihenfolge mit den Kupplungskomponenten

$[H—R_1](SO_3H)_x$ und $[H—R_2](SO_3H)_y$

(X) (XI)

erhalten, wobei x, y = 0 – 6 und x + y = n. Die Kupplung erfolgt in an sich bekannter Weise.

Geeignete, gegebenenfalls funktionell abgewandelte Kupplungskomponenten (X) bzw. (XI) sind beispielsweise

a) N,N-Dialkylaniline,
N,N-Dialkyl-m-toluidine,
N,N-Dialkyl-N'-acyl-phenylendiamine und
Diaminobenzolsulfonsäuren, wie
2,4- und 2,5-Diaminobenzolsulfonsäure,

wobei Alkyl vorzugsweise für Methyl oder gegebenenfalls durch Hydroxy, Cyan oder Methoxy substituiertes Ethyl bzw. Propyl steht und Acyl bevorzugt Acetyl, Methylsulfonyl oder Benzosulfonyl bedeuten.

b) Phenole wie
Phenol,
Resorcin,
3-Phenylamino-phenol und
Bisphenol A

c) Naphthole wie α-oder β-Naphthol oder deren Sulfonsäuren, wie
1-Hydroxy-napththalin-3-, 4- oder 6-sulfonsäure,
1-Hydroxy-naphthalin-3,6-disulfonsäure,
2-Hydroxy-naphthalin-3,6-disulfonsäure,

d) Naphtylamine wie
1-Naphthylamin-6- oder 7-sulfonsäure,

e) Aminonaphthole wie
1-Hydroxy-8-aminonaphthalin-5-sulfonsäure,
8-Amino-1-naphthol-3-, 6- oder 3-, 5-disulfonsäure bzw.
6- oder 7-Amino-1-naphthol-3-sulfonsäure.

f) Pyrazolonderivate wie 3-Methyl- oder -carboxyl-1-phenyl-pyrazolon-5 und deren 3'- oder 4'-sulfonsäuren. Auch die entsprechenden 2'-Methyl-4'-sulfonsäure oder 2'-Chlor-4'-sulfonsäure sind geeignet.

g) Acetessigarylide wie Anilin-, o, m oder p-Toluidin- oder o, m oder p-Anisidin-acetoacetat und derensulfonsäuren.

Die nach dem vorstehend beschriebenen Verfahren erhältlichen Farbstoffe können weiteren, an Farbstoffen üblichen, Umsetzungen unterzogen werden, beispielsweise, indem man primäre aromatische Aminogruppen diazotiert und mit weiteren Kupplungskomponenten umsetzt oder indem man Farbstoffe mit kupplungsfähigen Stellen mit Diazoniumsalzen zur Reaktion bringt. Man erhält so Tris-, Tetrakis- oder Poly-azo-Farbstoffe der Formel I, die formal Azobenzol-, Benzolazonaphthalin- oder Naphthalin-azonaphthalin-Substituenten tragen. Die Reihenfolge der Umsetzungen ist in weitem Rahmen, wie in der Azochemie bekannt, variierbar. So ist es geläufig, das Bisdiazoniumsalz der Verbindung IX mit 2-Äquivalenten Kupplungskomponenten X bzw. XI umzusetzen und dann weitere Reaktionen im obigen Sinne durchzuführen.

Häufig ist der Weg, zunächst nur 1 Äquivalent Kupplungskomponente zur Reaktion zu bringen, an der Monoazoverbindung weitere Reaktionen vorzunehmen und danach mit dem zweiten Äquivalent Kupplungskomponente umzusetzen, ebenso gangbar.

Metallisierbare Farbstoffe der Formel I können mit metallabgebenden Mitteln, insbesondere mit Chrom-, Kobalt-, Kupfer-, Eisen- oder Nickel-Salzen, evtl. unter Zusatz von Oxidationsmitteln, behandelt werden. Farbstoffe, die reduzierbare, insbesondere Nitrogruppen, aufweisen, können reduziert werden.

Farbstoffe, welche acylierbare oder alkylierbare Gruppen enthalten, können acyliert bzw. alkyliert und

Farbstoffe, die sulfonierbar sind, können mit Chlorsulfonsäure, Oleum oder Schwefeltrixoid sulfoniert werden.

Die neuen Farbstoffe eignen sich zum Färben stickstoffhaltiger Fasermaterialien wie Wolle und Polyamid sowie zum Färben von Leder.

Beispiel 1

0,0725 Mol 4,4'-Diamino-benzolsulfonsäure-phenylester-di-hydrochlorid werden, in 250 ml Wasser und 40 ml Salzsäure (30 %ig) gelöst, bei 0-5° mit 34 ml einer 4,35 molaren Natrium-nitrit-Lösung diazotiert. Das Bisdiazoniumsalz fällt teilweise aus. Nach 30-minütigem Rühren wird der geringe Nitritüberschuß mit Amidosulfonsäure entfernt.

0,0725 Mol 8-Amino-1-hydroxy-naphthalin-disulfonsäure (3,6) werden in 100 ml Wasser mit 40 %iger Natronlauge neutralgelöst und dannach mit 25 ml 30 %iger Salzsäure bei einem pH-Wert von ca. 1 gefällt. Man setzt 100 g Eis zu und läßt die Suspension des Bisdiazoniumsalzes einlaufen. Der pH-Wert sinkt auf 0,5 ab. Die Kupplung ist nach etwa einer Stunde beendet.

0,0725 Mol 4-Amino-benzolsulfonsäure werden in 100 ml Wasser mit 40 %iger Natronlauge neutral gelöst. Nach Zugabe von 100 g Eis und 40 ml 30 %iger Salzsäure wird mit etwa 17 ml 4,35 molarer Natrium-nitrit-Lösung diazotiert. Der Nitritüberschuß wird nach 30 Minuten mit wenig Amidosulfonsäure entfernt.

Die erste Kupplung wird mit 130 ml einer 20 %igen Natriumacetatlösung auf einen pH-Wert von 4 gestellt und unter Halten dieses Wertes (20 %ige Acetatlösung) langsam mit der Suspension des Diazoniumsalzes versetzt.

0,0725 Mol 3-Phenylamino-phenol werden in 150 ml Wasser suspendiert zugegeben. Der pH-Wert wird mit 18 %iger Sodalösung auf 7-8 gestellt. Nach 1 Stunde ist die Kupplung beendet. Man neutralisiert mit 30 %iger Salzsäure, salzt mit Kaliumchlorid aus, saugt ab und trocknet im Vakuum. Man erhält einen Farbstoff, der Polyamid, Wolle und Leder grauschwarz färbt. Seine Struktur entspricht der Formel

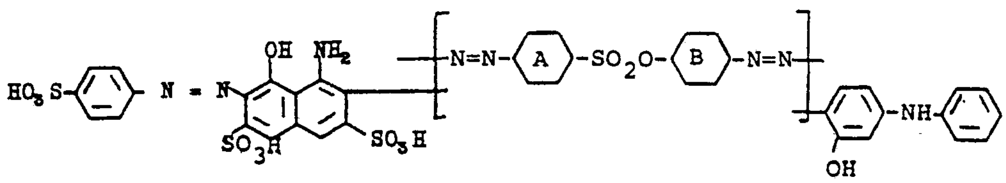

Ersetzt man im Beispiel 1 die 4-Aminobenzol-sulfonsäure und das 3-Phenylamino-phenol durch die äquivalenten Mengen A bzw. B der folgenden Tabelle, so erhält man ebenfalls wertvolle Farbstoffe

| Bsp. | A | B | Nuance |
|---|---|---|---|
| 2 | 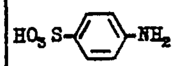 | 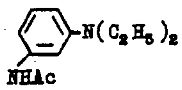 | schwarz |
| 3 | " | 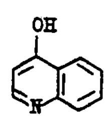 | grünst. schwarz |
| 4 | 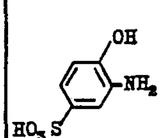 | 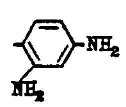 | rotst. schwarz |
| 5 | 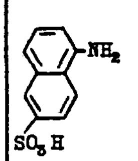 | 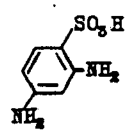 | grünst. schwarz |
| 6 | 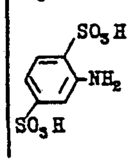 | 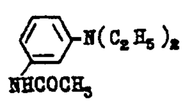 | rotst. schwarz |

| Bsp. | A | B | Nuance |
|---|---|---|---|
| 7 | 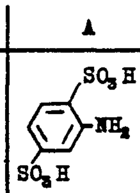 | 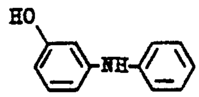 | schwarz |
| 8 | " | 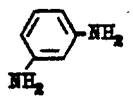 | schwarz |
| 9 | 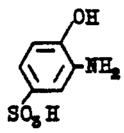 | 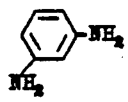 Cu-Komplex | schwarz |
| 10 | " | " Cr-Komplex | schwarz |
| 11 | 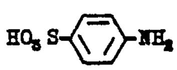 | 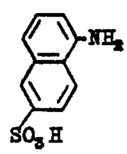 | rotst. schwarz |
| 12 | 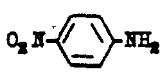 | 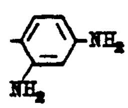 | grünst. schwarz |
| 13 | 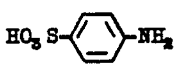 | " | grünst. schwarz |
| 14 | " | 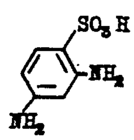 | grünst. schwarz |
| 15 | 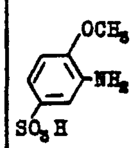 | 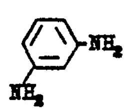 | grünst. schwarz |
| 16 | 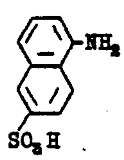 | 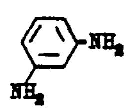 | grünst. schwarz |

Beispiel 17

0,0725 Mol 4-Aminobenzolsulfonsäure werden wie in Beispiel 1 diazotiert.

0,0725 Mol 8-Amino, 1-hydroxy-naphthalindisulfonsäure (3,6) werden in 100 ml Wasser mit 40 %iger Natronlauge neutral gelöst. Mit 25 ml 30 %iger Salzsäure wird gefällt (pH-Wert : ca. 1). Nach Zugabe von

100 g Eis wird die Diazoniumsalzlösung zugegeben. Mit 20 %iger Natriumacetatlösung wird ein pH-Wert von 1 eingestellt. Die Kupplung ist nach 2 Stunden beendet. Der pH-Wert wird mit wenig 40 %iger Natronlauge auf 4 gestellt.

0,0725 Mol 4,4'-Diamino-benzolsulfonsäurephenylester-dihydrochlorid werden in 380 ml Wasser gelöst, mit 40 ml 30 %iger Salzsäure versetzt und mit 34,5 ml 4,35 molarer Natriumnitritlösung bei 0-5° diazotiert. Nach 30 Minuten wird der Nitritüberschuß mit wenig Amidosulfonsäure entfernt. Bei pH 4,5 gibt man die Suspension des Bis-Diazoniumsalzes zum Monoazofarbstoff. Die Kupplung dauert 30 Minuten.

0,0725 Mol 1,3-Phenylendiamin werden, in 80 ml Wasser gelöst, langsam zugegeben, wobei ein pH-Wert von 9 mit 18 %iger Sodalösung gehalten wird. Nach der Kupplung wird angesäuert, der Farbstoff mit Kochsalz ausgesalzen, abgesaugt und im Vakuum getrocknet. Man erhält 60 g eines Farbstoffes der Formel

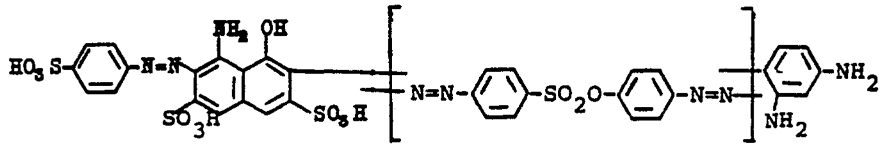

der Leder, Polyamid und Wolle in einem grünstichigen Schwarz färbt.

Ersetzt man im Beispiel 17 4-Aminobenzolsulfonsäure und 1,3-Phenylendiamin durch die äquivalenten Mengen A und B der folgenden Tabelle, so erhält man ebenfalls wertvolle Farbstoffe.

| Bsp. | A | B | Nuance |
|---|---|---|---|
| 18 | 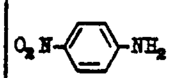 | 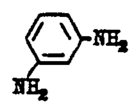 | grünst. schwarz |
| 19 | 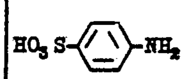 | 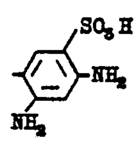 | grünst. schwarz |
| 20 | 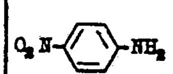 | " | grünst. schwarz |
| 21 | 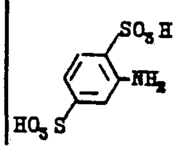 | 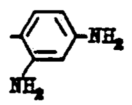 | grünst. schwarz |

Beispiel 22

0,0725 Mol 8-Amino, 1-hydroxy-naphthalin-(3,6)-disulfonsäure werden wie im Beispiel 1 mit 0,0725 Mol des Bis-Diazoniumions des 4,4'-Diamino-benzolsulfonsäure-phenylesters und dann bei enem pH-Wert von 4 mit 0,0725 Mol des gleichen Bis-Diazoniumions umgesetzt.

Nach beiden Kupplungen gibt man 0,145 Mol 2,4-Diaminobenzolsulfonsäure zu, hält etwa 3 Stunden einen pH-Wert von 9 ein, neutralisiert mit 30 %iger Salzsäure, salzt mit Kochsalz aus, saugt ab und trocknet den Farbstoff im Vakuum.

Der Farbstoff der Formel

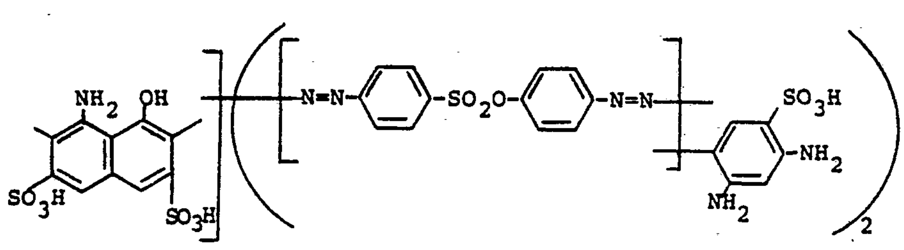

färbt Wolle, Polyamid, Leder in grau-schwarz. Weitere wertvolle Farbstoffe der allgemeinen Struktur

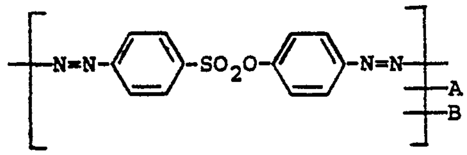

erhält man mit den folgenden Komponenten A bzw. B.

| Bsp. | A | B | Nuance |
|---|---|---|---|
| 23 | 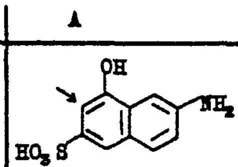 | 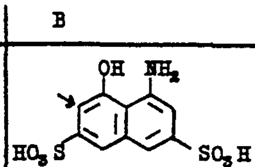 | rotst. schwarz |
| 24 | " | 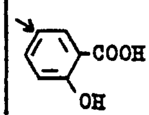 | orange |
| 25 | 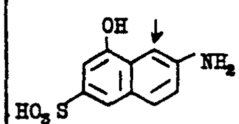 | 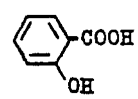 | rot |
| 26 | 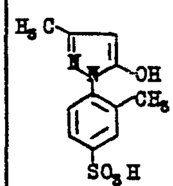 | 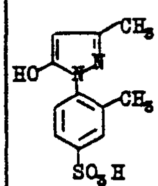 | gelb |
| 27 | 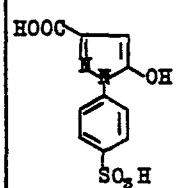 | 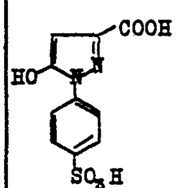 | gelb |
| 28 | 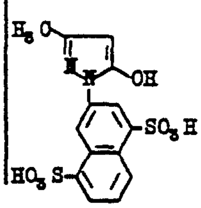 | 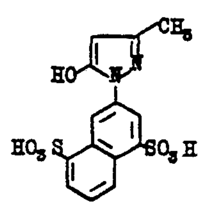 | gelb |

Die Farbstoffe der Beispiele 26 bis 28 lassen sich oxidativ kupfern :

Beispiel 29

0,036 Mol Farbstoff des Beispiels 26, mit wenig Soda neutral gelöst, werden mit einer Lösung von 0,036 Mol Kupfersulfatpentahydrat in wenig Wasser versetzt. Man stellt mit 30 %iger Salzsäure auf pH 4,5 und gibt 50 ml einer 20 %igen Natriumacetat-Lösung zu. Bei Raumtemperatur tropft man eine Lösung von 0,09 Mol Wasserstoffperoxid (30 %ig) in 40 ml Wasser zu. Nach 30 Minuten ist die Reaktion beendet, man salzt mit Kochsalz aus, saugt ab und trocknet im Vakuum.

Der Farbstoff färbt Polyamid, Wolle und Leder in orangebraunen Nuancen an.

Die oxidativ gekupferten Farbstoffe der Beispiele 27 und 28 haben ähnliche Nuancen.

## Ansprüche

1. Gegebenenfalls metallhaltige Azofarbstoffe, die in Form der freien Säure der Formel

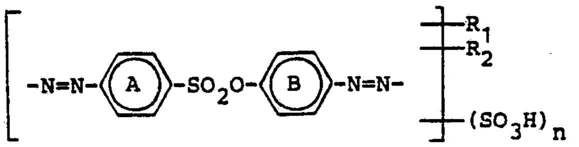

(I)

entsprechen,
worin

$R_1$, $R_2$ = Rest einer gegebenenfalls funktionell abgewandelten Kupplungskomponente
n = 1-6 und wobei die Ringe A und B weitersubstituiert sein können.

2. Farbstoffe des Anspruchs 1 der Formel

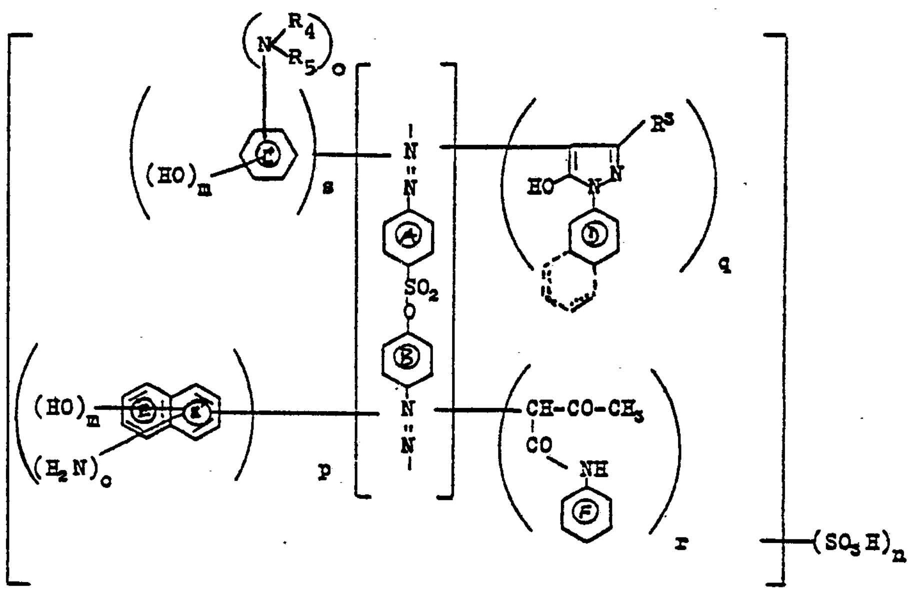

(II)

worin
n = 1-6
o und m = 0, 1 oder 2 und
(o + m) 0
$R_3$ = Methyl, Carboxyl, CN,
$R_4$, $R_5$ = Wasserstoff oder gegebenenfalls substituiertes Alkyl und
p, q, r und s = 0, 1 oder 2 und
(p + q + r + s) = 2,
wobei die Ringe A-F weitere Substituenten enthalten können und die Reste —$SO_3H$ an einem der Ringe A-F oder $R_3$ gebunden sind.

3. Farbstoffe der Formel

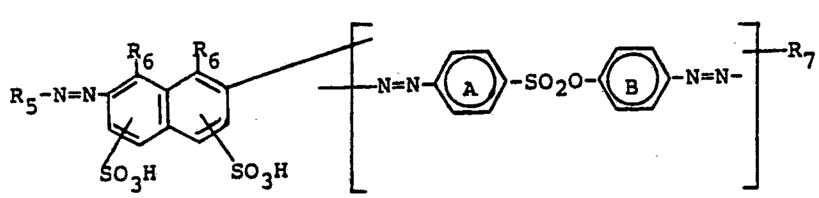

worin
$R_5$ den Rest einer Diazokomponente der Benzol- oder Naphthalinreihe, bevorzugt Phenyl-, 4-Nitrophenyl, 4-Sulfo- oder 2,5- bzw. 2,4-Disulfophenyl-, 2-Hydroxy-5-sulfophenyl- oder 6-bzw. 7-Sulfo-2-naphthyl,

ein $R_8$ $NH_2$, das andere
$R_8$ OH und
$R_7$ den Rest einer Kupplungskomponente, insbesondere der Aminobenzol-, Hydroxybenzol-, Aminonaphthalin- oder Acetessigarylidreihe darstellt.

4. Metallkomplexfarbstoffe auf Basis von metallfreien Farbstoffen der Formel

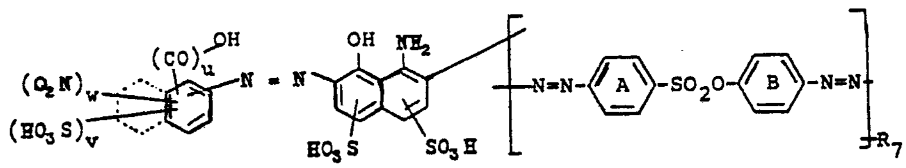

worin
$R_7$ die in Anspruch 3 angegebene Bedeutung hat,
u, w = 0 oder 1 und
v = 1 oder 2 bedeuten.

5. Farbstoffe der Formel

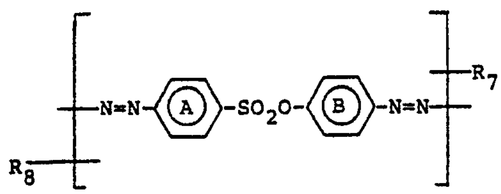

worin
$R_7$ die obengenannte Bedeutung hat und
$R_8$ für den Rest einer Aminohydroxynaphthalinmono- oder -disulfonsäure steht, insbesondere einer solchen der Formel

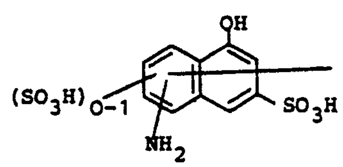

6. Farbstoffe der Formeln

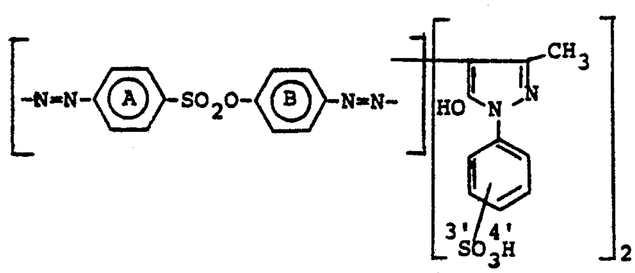

und

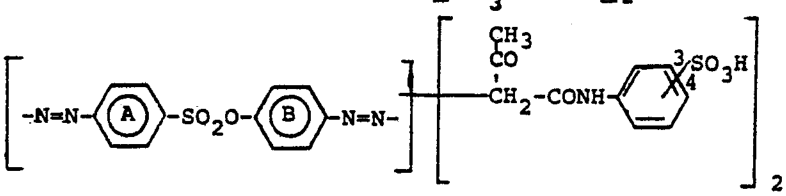

7. Verwendung der Farbstoffe der Ansprüche 1-6 zum Färben stickstoffhaltiger Fasermaterialien, insbesondere Wolle, Polyamid und Leder.

**Claims**

1. Azo dyestuffs which optionally contain metals and which, in the form of the free acid, correspond to the formula

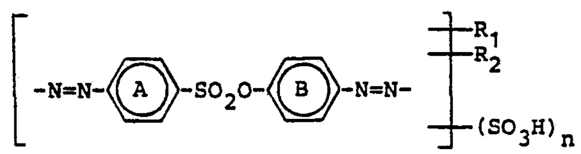

(I)

wherein

$R_1$ and $R_2$ are the radical of an optionally functionally modified coupling component, n is 1-6 and the rings A and B can be further substituted.

2. Dyestuffs according to Claim 1, of the formula

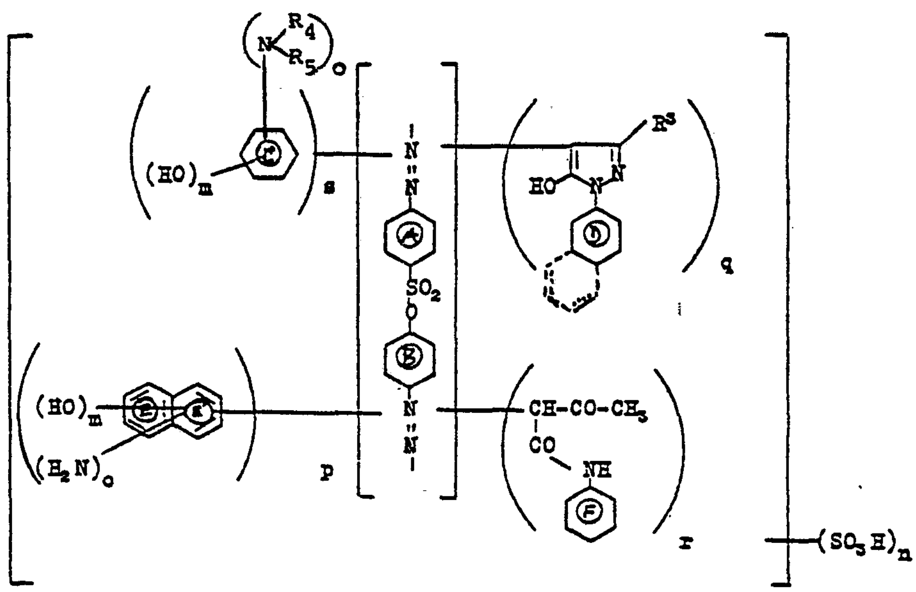

(II)

wherein

n is 1-6,

o and m are 0, 1 or 2 and $(o + m) \neq 0$,

$R_3$ is methyl, carboxyl or CN,

$R_4$ and $R_5$ are hydrogen or optionally substituted alkyl,

p, q, r and s are 0, 1 or 2 and $(p + q + r + s) = 2$,

the rings A-F can contain further substituents and

the radicals $-SO_3H$ are bonded to one of the rings A-F or to $R_3$.

3. Dyestuffs of the formula

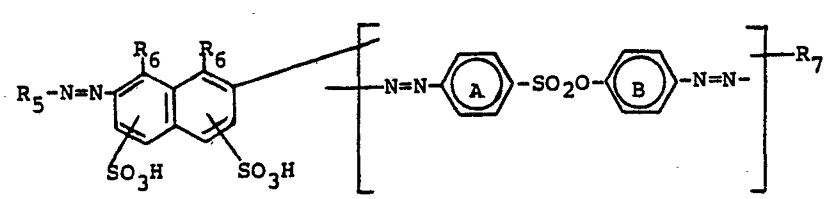

wherein

$R_5$ represents the radical of a diazo component of the benzene or naphthalene series, preferably phenyl, 4-nitrophenyl, 4-sulphophenyl or 2,5- or 2,4-disulphophenyl, 2-hydroxy-5-sulphophenyl or 6- or 7-sulpho-2-naphthyl,

one $R_6$ represents $NH_2$ and the other

$R_6$ represents OH and

$R_7$ represents the radical of a coupling component, in particular of the aminobenzene, hydroxybenzene, aminonaphthalene or acetoacetic acid arylide series.

4. Metal complex dyestuffs based on metal-free dyestuffs of the formula

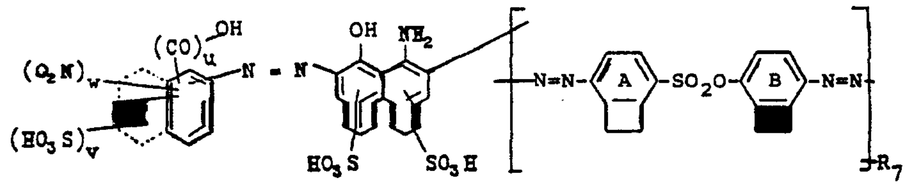

wherein

$R_7$ has the meaning given in Claim 3,

u and w denote 0 or 1 and

v denotes 0, 1 or 2.

5. Dyestuffs of the formula

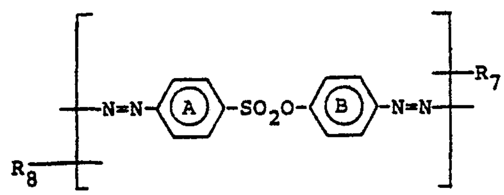

wherein

$R_7$ has the above-mentioned meaning and

$R_8$ represents the radical of an aminohydroxynaphthalene-monosulphonic or -disulphonic acid, in particular of an acid of the formula

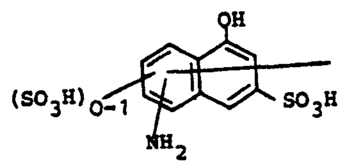

6. Dyestuffs of the formulae

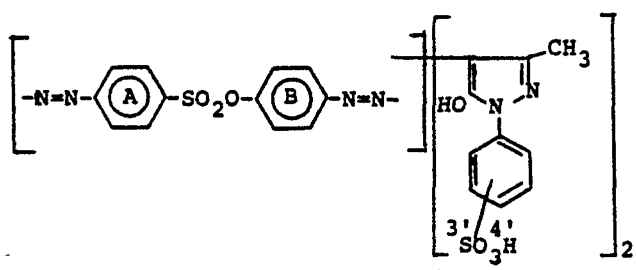

and

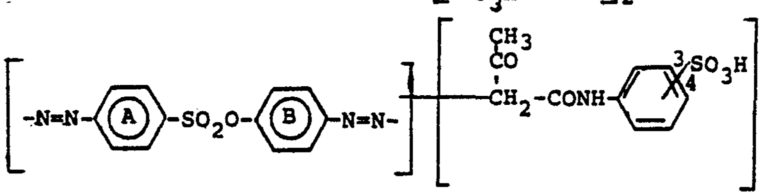

7. Use of the dyestuffs according to claims 1-6 for dyeing nitrogen-containing fibre materials, in paticular wool, polyamide and leather.

**Revendications**

1. Colorants azoïques contenant éventuellement un métal, qui correspondent, sous la forme de l'acide libre, à la formule

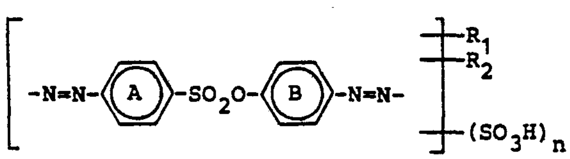

(I)

dans laquelle

$R_1$, $R_2$ = reste d'un copulant éventuellement modifié du point de vue fonctionnel
n = 1 à 6 et les noyaux A et B peuvent encore être substitués.

2. Colorants suivant la revendication 1, de formule

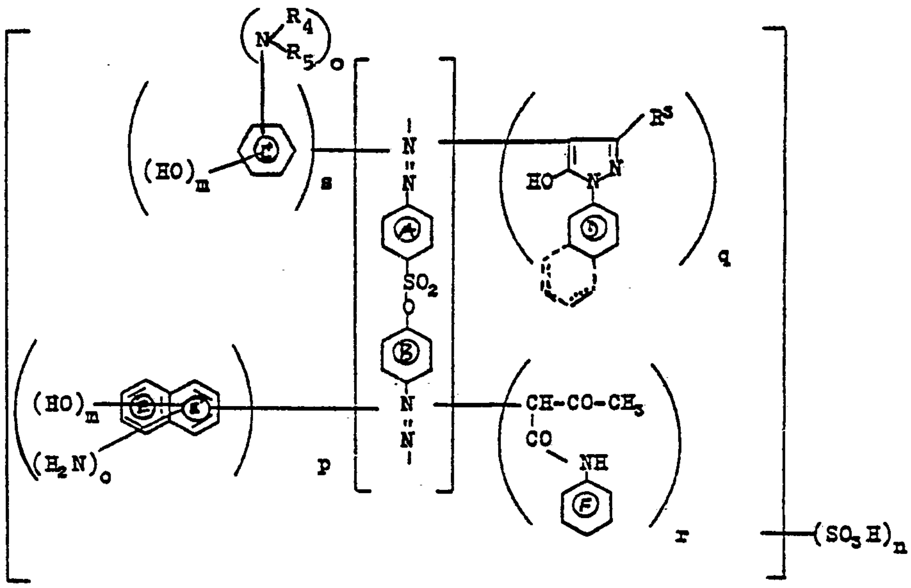

(II)

dans laquelle

n = 1-6
o et m = 0, 1 ou 2 et
(o + m) = 0
$R_3$ = méthyle, carboxyle, CN,
$R_4$, $R_5$ = hydrogène ou alkyle éventuellement substitué et
p, q, r et s = 0,1 ou 2 et
(p + q + r + s) = 2,

les noyaux A-F pouvant porter d'autres substituants et les restes —$SO_3H$ étant liés à l'un des noyaux A-F ou à $R_3$.

3. Colorants de formule

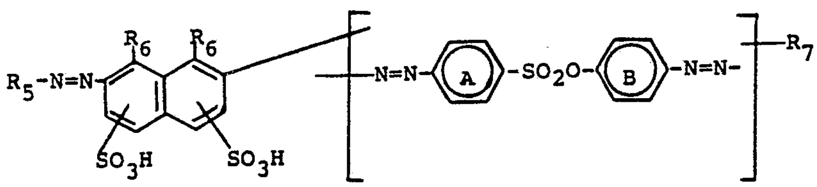

dans laquelle

$R_5$ représente le reste d'un composant diazotable de la série du benzène ou du naphtalène, de préférence un reste phényle, 4-nitrophényle, 4-sulfo- ou 2,5- et 2,4-disulfophényle, 2-hydroxy-5-sulfophényle ou 6- et 7-sulfo-2-naphtyle,

un groupe $R_6$ est $NH_2$, l'autre groupe $R_6$ est OH et

$R_7$ représente le reste d'un copulant, notamment de la série de l'aminobenzène, de l'hydroxybenzène, de l'aminonaphtalène ou des arylides acétylacétiques.

4. Colorants complexes métalliques à base de colorants non métalliques de formule

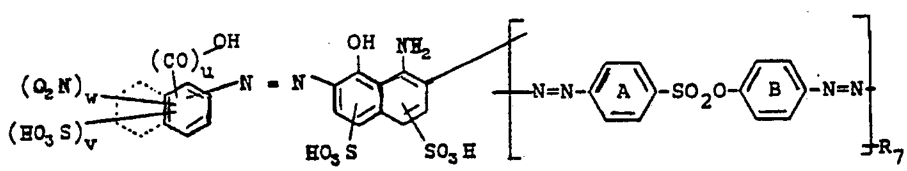

dans laquelle

$R_7$ a la définition indiquée dans la revendication 3,

u, w = 0 ou 1 et

v = 0, 1 ou 2.

5. Colorants de formule

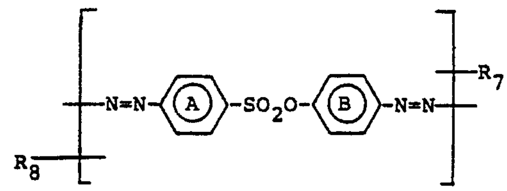

dans laquelle

$R_7$ a la définition indiquée ci-dessus et

$R_8$ est le reste d'un acide aminohydroxynaphtalènemono- ou -disulfonique, notamment d'un acide de formule

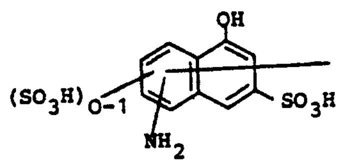

6. Colorants de formules

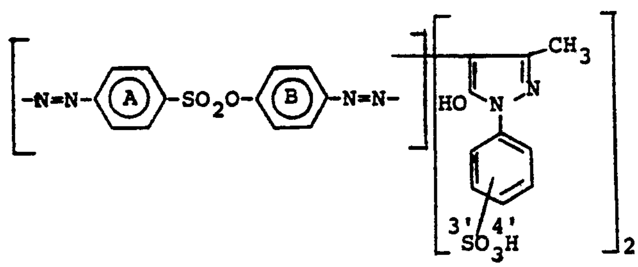

et

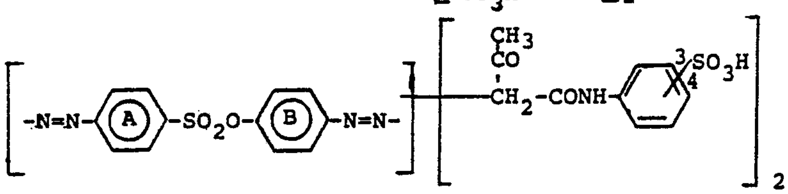

7. Utilisation des colorants suivant les revendications 1 à 6 pour la teinture de matières fibreuses contenant de l'azote, notamment de laine, de polyamide et de cuir.